Europäisches Patentamt

**European Patent Office**

Office européen des brevets

(11) Numéro de publication: **0 207 820**
**B1**

---

## FASCICULE DE BREVET EUROPEEN

---

(45) Date de publication du fascicule du brevet:
**14.02.90**

(21) Numéro de dépôt: **86401084.8**

(22) Date de dépôt: **22.05.86**

(51) Int. Cl.⁴: **G07C 5/12**, G01D 1/06,
G01D 15/32

---

(54) **Dispositif inscripteur pour enregistreurs à deux disques porte-diagramme.**

---

(30) Priorité: **24.05.85 FR 8507876**

(43) Date de publication de la demande:
**07.01.87 Bulletin 87/2**

(45) Mention de la délivrance du brevet:
**14.02.90 Bulletin 90/7**

(84) Etats contractants désignés:
**DE FR GB IT**

(56) Documents cités:
**EP-A- 0 012 223**
**FR-A- 2 164 323**
**FR-A- 2 340 585**

(73) Titulaire: **JAEGER, 2, rue Baudin,**
**F-92303 Levallois-Perret(FR)**

(72) Inventeur: **Boucher, Alain, 182, rue de Charenton,**
**F-75012 Paris(FR)**
Inventeur: **Guillou, Jean Pierre, 165, rue Saint-Denis,**
**F-92700 Colombes(FR)**

(74) Mandataire: **Martin, Jean-Jacques et al, Cabinet**
**REGIMBEAU 26, Avenue Kléber, F-75116 Paris(FR)**

---

ACTORUM AG

## Description

L'invention concerne un dispositif inscripteur pour enregistreurs à deux disques porte-diagramme, tels que des enregistreurs de route, dénommés en général tachygraphes.

L'enregistrement simultané sur un deuxième disque porte-diagramme est rendu nécessaire dans certaines applications ; en particulier, avec les enregistreurs de route, cela permet d'inscrire la variation d'un paramètre auxiliaire, par exemple le temps de travail et de repos d'un deuxième chauffeur, tandis que le premier disque porte-diagramme est concerné par l'enregistrement de plusieurs données d'utilisation (vitesse du véhicule, temps d'utilisation, distance parcourue), et éventuellement consommation ou régime moteur dans le cas où ce dernier disque est le seul utilisé.

Les disques porte-diagramme utilisés comme supports d'enregistrement doivent pouvoir être facilement placés dans l'enregistreur, et leur extraction doit être possible sans altérer l'enregistrement obtenu. Ces manipulations sont délicates dans le cas d'une utilisation de deux disques porte-diagramme disposés parallèlement et tournant en synchronisme ; c'est pourquoi des dispositifs inscripteurs qui comportent des moyens de support et des organes scripteurs présentent en général une structure dont la simplicité est difficilement compatible avec la compacité demandée pour les boîtiers d'enregistreur.

Selon une technique ancienne, il était prévu de disposer deux disques porte-diagramme coaxialement, avec une entretoise de séparation, l'inscription entre les disques se faisant au moyen d'un système articulé, se déformant parallèlement aux disques, et fixé par un arbre latéral parallèle à l'axe du boîtier, au-delà de la périphérie desdits disques. Citons par exemple le brevet allemand N° 959 232 décrivant un tel dispositif inscripteur certes robuste, mais encombrant et d'un maniement malaisé pour les opérations d'insertion et d'extraction des disques porte-diagramme. Un autre inconvénient de cette disposition réside dans l'imprécision de l'entraînement des deux disques porte-diagramme serrés aux deux extrémités de l'entretoise cylindrique d'espacement ; or un glissement relatif provoque bien évidemment des erreurs d'interprétation des enregistrements, car la référence horaire n'est plus exactement repérée.

L'état de la technique peut encore être illustré par la demande de brevet européen N° 0 012 223 et la demande de brevet français N° 2 340 585.

Cette technique a été améliorée depuis, car les exigences d'encombrement sont devenues plus strictes, de sorte qu'une fixation de supports d'organes scripteurs entre la surface intérieure du boîtier et le bord des disques porte-diagramme ne devenait plus possible. Il a été ainsi proposé, pour le montage de l'organe scripteur disposé entre les deux disques porte-diagramme, une assiette-support articulée sur le capot de l'enregistreur au voisinage de la charnière d'articulation de celui-ci.

Citons par exemple le brevet français N° 2 164 323 décrivant un tel dispositif inscripteur améliorant très sensiblement les techniques anciennes par sa compacité et son maniement relativement aisé : mise en place d'un premier disque porte-diagramme contre la face intérieure du capot articulé, insertion d'un anneau d'écartement, basculement de l'assiette-support en direction de ladite face intérieure, mise en place du deuxième disque porte-diagramme en passant sous la portion d'entraînement du bras support de l'organe scripteur. Cette structure est cependant complexe, et la présence de l'anneau d'écartement, même clipsable sur l'assiette-support, peut rendre imparfait l'entraînement des deux disques porte-diagramme, et donc introduire une certaine marge d'erreur dans l'interprétation des enregistrements obtenus. Par ailleurs, l'organe scripteur étant réalisé avec un bras oscillant autour d'un point fixe de l'assiette-support, le tracé de l'enregistrement correspondant se fait pas passes curvilignes, ce qui le différencie des passes rectilignes réalisées classiquement par les autres organes scripteurs, et de plus le positionnement dudit organe scripteur est difficile à contrôler parfaitement en raison de la multiplicité des jeux introduits.

L'invention a pour objet de proposer un dispositif inscripteur plus performant que les dispositifs précités, en particulier permettant und mode d'enregistrement précis au moyen d'un organe scripteur disposé entre deux disques porte-diagramme.

Un autre objet de l'invention est de proposer un dispositif de structure simple, permettant un centrage et un entraînement améliorés pour les deux disques porte-diagramme.

Un autre objet de l'invention est de proposer un dispositif apte à être utilisé avec des dispositifs optionnels d'inscription et/ou de contrôle de présence du disque.

Il s'agit plus particulièrement d'un dispositif inscripteur pour enregistreur à deux disques porte-diagramme, ledit enregistreur comprenant un boîtier, une porte articulée sur ledit boîtier et un mécanisme d'entraînement des disques porte-diagramme, le dispositif inscripteur comportant des moyens de support et des organes scripteurs permettant une inscription simultanée des deux disques porte-diagramme, caractérisé par le fait qu'il comporte une table intermédiaire passant entre les deux disques porte-diagramme sur un secteur angulaire de ceux-ci, ladite table étant formée d'une partie montée fixe sur la porte à distance de la face intérieure de celle-ci, et d'une partie mobile articulée sur ladite partie fixe, et au moins un organe scripteur disposé entre ladite partie mobile et ladite face intérieure de la porte, ledit organe scripteur étant également articulé sur ladite partie fixe de la table intermédiare.

De préférence, pour une structure simple, l'organe scripteur disposé entre les disques porte-diagramme et la partie mobile de la table intermédiaire sont articulés sur un axe commun, sensiblement perpendiculaire à l'axe d'articulation de la porte.

Pour une manipulation aisée et une meilleure fiabilité de l'enregistrement réalisé par l'organe scripteur disposé entre les disques porte-diagramme, des moyens élastiques sont prévus pour rappeler constamment la partie mobile de la table intermédiaire en direction de la face intérieure de la porte ;

pour protéger l'organe scripteur lors des manipulations d'insertion ou d'extraction des disques, d'autres moyens élastiques plus faibles sont prévus pour rappeler constamment l'organe scripteur disposé entre les disques porte-diagramme en direction de la partie mobile de la table intermédiaire.

Les moyens élastiques précités sont avantageusement des ressorts de torsion montés sur l'axe d'articulation commun. Il est alors intéressant de prévoir une disposition selon laquelle le ressort servant au rappel angulaire de l'organe scripteur sert également de rappel axial dudit organe scripteur vers une position de butée formant référence pour le diagramme d'enregistrement concerné.

Selon une autre caractéristique avantageuse, la partie fixe de la table intermédiaire supporte des organes transmettant le mouvement à l'organe scripteur disposé entre les disques porte-diagramme, lesdits organes de transmission étant mobiles en translation parallèlement à l'axe d'articulation dudit organe scripteur, et l'organe scripteur est disposé entre les disques porte-diagramme de façon à permettre un enregistrement ayant la même référence angulaire que ceux obtenus par le ou les autres organes scripteurs montés de façon connue en soi dans le boîtier de l'enregistreur : ceci permet d'obtenir un tracé d'enregistrement selon un mode rectiligne alternatif, de la même façon que ce qui est réalisé avec les autres organes scripteurs

Selon une autre caractéristique, la table intermédiaire a la forme générale d'un secteur angulaire dont la largeur permet le contact naturel des deux disques porte-diagramme dans la zone centrale d'entraînement desdits disques porte-diagramme, ledit secteur angulaire pouvant correspondre à un angle d'environ 120°.

Avantageusement, la partie mobile de la table intermédiaire présente, du côté de la face intérieure de la porte, un évidement recevant l'organe scripteur adjacent pour protéger ledit organe lors de l'insertion du disque porte-diagramme concerné, et cet évidement est bordé par un ergot de protection au voisinage de l'extrémité libre de l'organe scripteur.

De préférence, la partie mobile de la table intermédiaire présente une fente traversante permettant le passage d'un organe contrôlant la présence du disque porte-diagramme passant sur ladite table intermédiaire, et porte en outre un galet au voisinage de l'organe scripteur disposé entre les disques porte-diagramme, pour un appui de la partie mobile sur le disque porte-diagramme passant sous ladite table intermédiaire.

Pour améliorer encore les résultats obtenus et permettre l'utilisation d'autres options, il est avantageux de prévoir en outre une table d'appui supplémentaire montée fixe contre la face intérieure de la porte, en regard de la partie mobile de la table intermédiaire, cette table d'appui supplémentaire pouvant être par ailleurs munie d'une fente traversante permettant le passage d'un autre organe scripteur pour la face opposée du disque porte-diagramme concerné ou d'un organe contrôlant la présence dudit disque porte-diagramme.

D'autres caractéristiques et avantages de l'invention apparaîtront plus clairement à la lumière de la description qui va suivre et du dessin annexé, concernant un mode de réalisation préférentiel d'un dispositif inscripteur conforme à l'invention, en référence aux figures où :

- la figure 1 montre un enregistreur dont la porte articulée est ouverte, équipé d'un dispositif inscripteur conforme à l'invention, les deux disques porte-diagramme destinés à être reçus n'étant pas représentés pour faciliter la clarté de la figure ;
- la figure 2 est une vue de dessus partielle du dispositif inscripteur de la figure 1, montrant de façon plus détaillée les différents organes le constituant ;
- la figure 3 est une perspective éclaté illustrant les différents organes du dispositif inscripteur représenté à la figure 2 en position montée ;
- la figure 4 illustre en perspective un détail concernant les moyens transmettant le mouvement à l'organe scripteur déjà représenté aux figures 2 et 3 ;
- la figure 5 illustre en coupe un détail concernant le logement de l'organe scripteur dans un évidement de la partie mobile de la table intermédiaire ;
- les figures 6a à 6e montrent schématiquement comment est réalisée l'insertion des deux disques porte-diagramme, l'extraction desdits disques se faisant naturellement avec les mêmes opérations effectuées dans un ordre inverse.

Le dispositif inscripteur qui va être décrit est destiné à équiper un enregistreur de route à deux disques porte-diagramme, communément appelé tachygraphe.

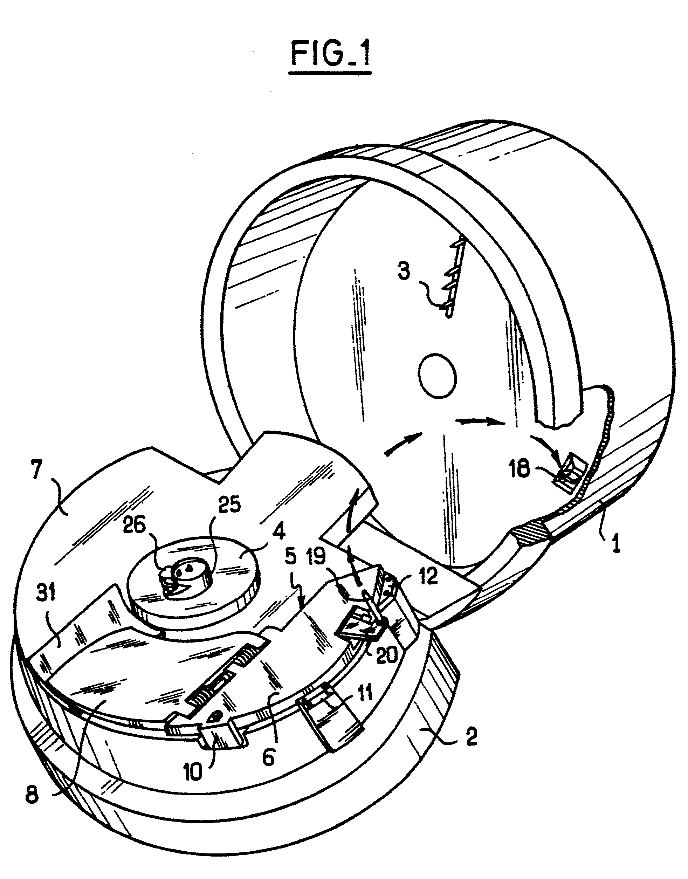

Ainsi qu'illustré en figure 1, l'enregistreur comporte un boîtier 1, une porte 2 articulée sur ledit boîtier, et un mécanisme d'entraînement (non représenté) des disques porte-diagramme. L'enregistreur de route représenté peut recevoir deux disques porte-diagramme, c'est-à-dire un premier disque servant au support d'enregistrement par des organes scripteurs 3 (indiquant la vitesse du véhicule, le temps d'utilisation, la distance parcourue, et éventuellement la consommation ou le régime moteur), et un deuxième disque porte-diagramme servant à inscrire la variation d'un paramètre auxiliaire, par exemple le temps de travail et de repos d'un deuxième chauffeur. Dans la suite de la description, ces deux disques porte-diagramme seront dénommés respectivement premier et deuxième disque pour la clarté de l'exposé, bien que le disque dénommé deuxième disque soit en fait inséré en premier dans l'enregistreur.

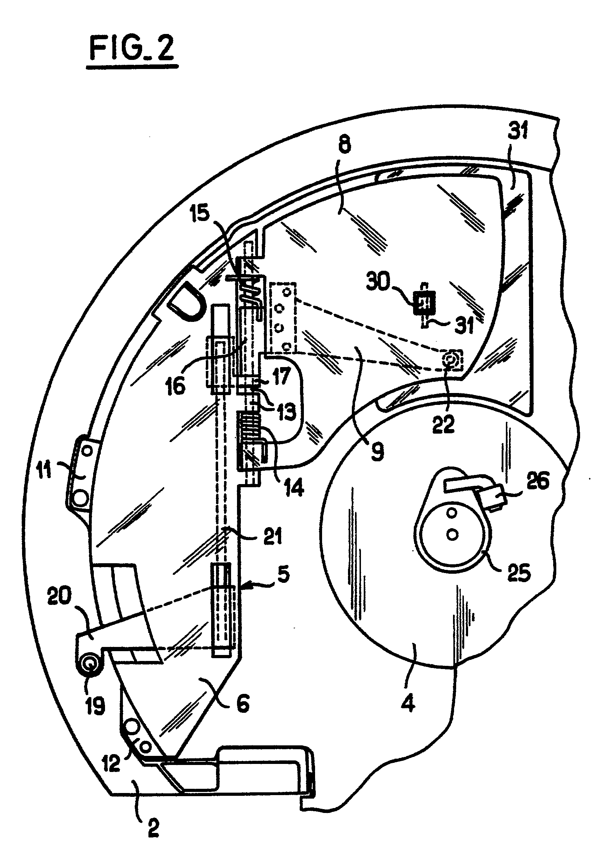

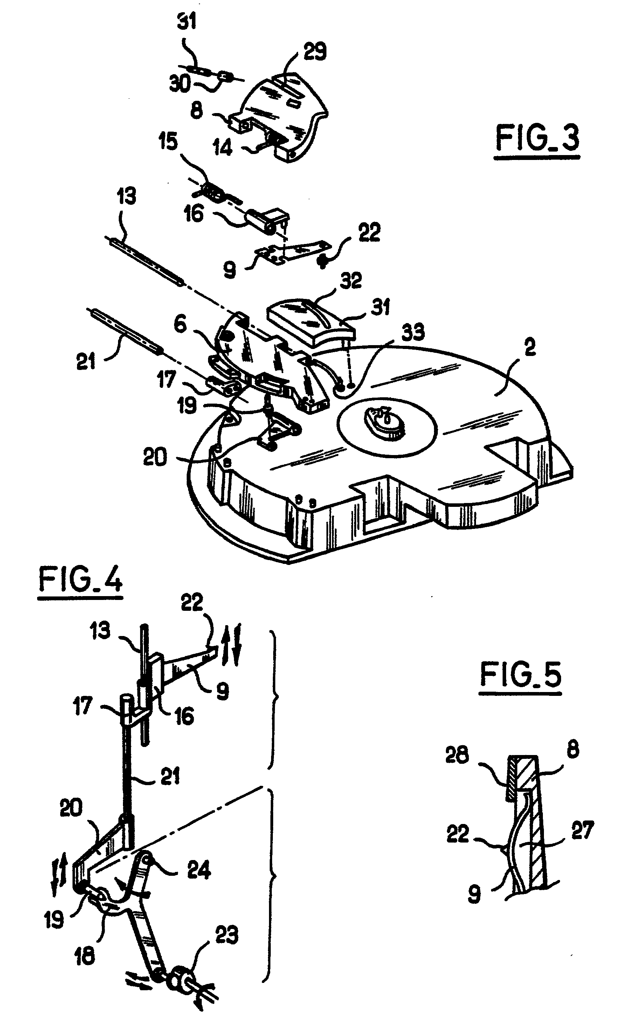

Conformément à un principe essentiel de la présente invention, les deux disques montés superposés de manière isoaxiale sur une couronne support 4, sont écartés l'un de l'autre seulement sur un secteur angulaire de ceux-ci, correspondant à l'enregistrement inter-disques. Il est ainsi prévu une table intermédiaire 5 passant entre les deux disques porte-diagramme sur un secteur angulaire de ceux-ci, ladite table étant formée d'une partie 6 montée fixe sur la porte 2, à distance de la face intérieure 7 de celle-ci, et d'une partie mobile 8 articulée sur ladite partie fixe ; il est également prévu au moins un organe scripteur 9 disposé entre la partie mobile articulée 8 et la face intérieure 7 de la porte, ledit organe scripteur étant également articulé sur la partie fixe 6 de la table intermédiaire (le scripteur 9 est caché par la partie mobile 8 sur la figure 1, mais est représenté sur la vue de la figure 2 ou la perspective éclatée de la figure 3). La table intermédiaire 5 sert donc d'appui pour l'inscription sur le premier disque, et de cale d'espacement permettant l'enregistrement simultané sur le deuxième disque, en dessous de la partie mobile 8.

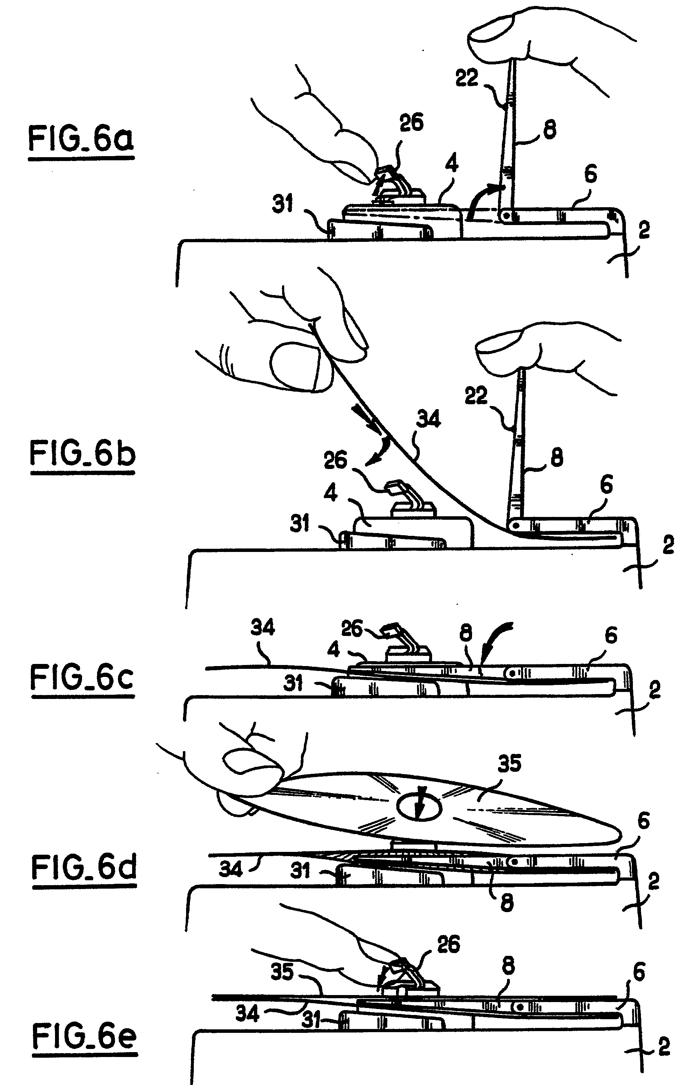

La partie fixe 6 de la table intermédiaire est fixée et positionnée au moyen de pattes 10, 11, 12 de façon que son plan soit sensiblement parallèle à la face intérieure 7 de la porte, et à une distance de celle-ci permettant l'insertion du deuxième disque. Ici, l'organe scripteur 9 et la partie mobile 8 sont articulés sur un axe commun 13 porté par la partie fixe 6 de la table intermédiaire. De toute façon, que les axes d'articulation soient communs ou non, il est important de noter que l'organe scripteur 9 est articulé sur un axe porté par une partie fixe, ce qui est préférable au montage d'un axe porté par une partie mobile comme c'était le cas pour les techniques antérieures. Pour une manipulation aisée et une meilleure fiabilité de l'enregistrement réalisé par l'organe scripteur, il est prévu d'une part des moyens élastiques rappelant constamment la partie mobile 8 en direction de la face intérieure 7 de la porte, et d'autre part des moyens élastiques plus faibles que les premiers (par exemple dix fois plus faibles) pour rappeler constamment l'organe scripteur 9 en direction de la partie mobile de la table intermédiaire. C'est ainsi qu'un ressort de torsion 14 tend à rabattre la partie mobile 8 vers la face intérieure de la porte, créant ainsi une force d'appui pour l'organe scripteur 9 lors de l'enregistrement sur le deuxième disque, tandis qu'un autre ressort de torsion 15, également monté sur l'axe commun d'articulation 13, tend à appliquer l'organe scripteur contre la face en regard de la partie mobile 8, afin de ne pas gêner l'insertion ou l'extraction du deuxième disque lors du soulèvement de ladite partie mobile 8, ainsi que cela sera décrit en détail en référence aux figures 6a à 6e.

L'organe scripteur 9 est fixé sur une plaquette 16, qui peut coulisser librement sur l'axe 13 en réponse à l'action d'un poussoir 17 faisant partie des organes transmettant le mouvement à l'organe scripteur 9 à partir de la prise de mouvement 18 du boîtier (figure 1). Ces organes de transmission comprennent ainsi successivement un doigt 19, coopérant avec la prise de mouvement 18 en position fermée de la porte et porté par une palette 20, une tige 21, et le poussoir 17 dont une excroissance est en contact avec la plaquette 16 supportant l'organe scripteur 9. Il convient de remarquer que le ressort de torsion 15, servant au rappel angulaire de l'organe scripteur 9, sert ici également de rappel axial dudit organe scripteur vers une position de butée formant référence pour le diagramme d'enregistrement concerné. La prise de mouvement 18 transmet ainsi un mouvement alternatif rectiligne à la pointe 22 de l'organe scripteur 9 : ceci permet d'obtenir un tracé d'enregistrement réalisé par passes rectilignes, donc de façon analogue au tracé d'enregistrement obtenu avec les autres organes scripteurs, ce qui permet d'obtenir un même type d'inscription sur les disques pour tous les organes scripteurs de l'enregistreur de route. A toutes fins utiles, la figure 4 illustre schématiquement la transmission du mouvement : à l'intérieur du boîtier, une came 23 transmet un mouvement d'oscillation à un bras fixé en 24 et terminé par une patte 18, ce mouvement étant communiqué jusqu'à la pointe 22 par les organes de transmission portés par la porte 2, sous forme d'un mouvement alternatif de translation dans une direction parallèle à l'axe d'articulation de l'organe scripteur 9. Grâce à cette disposition, l'organe scripteur 9 peut être disposé entre les disques porte-diagramme de façon à permettre un enregistrement ayant la même référence angulaire que ceux obtenus par le ou les autres organes scripteurs montés de façon connue dans le boîtier de l'enregistreur.

Il est important de noter que la table intermédiaire 5 a la forme générale d'un secteur angulaire, correspondant ici à un angle d'environ 120°, dont la largeur permet le contact naturel des deux disques porte-diagramme dans la zone centrale d'entraînement : ainsi, lorsque les deux disques sont disposés sur l'arbre d'entraînement 25, la patte de fixation 26 maintient lesdits disques contre la couronne support 4, ce qui permet d'avoir un support de centrage et une fixation communs pour les deux disques, sans entretoise, avec un entraînement tout à fait satisfaisant. On remarquera que l'épaisseur de la table intermédiaire est suffisamment faible pour éviter toute distorsion du premier disque au franchissement de ladite table.

L'organe scripteur 9 constituant une partie relativement vulnérable, il peut s'avérer intéressant de prévoir un évidement 27 ménagé dans la partie mobile 8 de la table intermédiaire pour recevoir ledit organe scripteur, avec un becquet 28 fixé en bout de ladite partie mobile (détail illustré en figure 5) : ceci permet d'éviter tout risque d'arrachage ou de détérioration de l'organe scripteur, lors d'une manipulation de la partie mobile pour l'insertion ou l'extraction du deuxième disque.

La partie mobile de la table intermédiaire peut en outre être munie d'une fente radiale 29 (figure 3) permettant le passage d'un organe contrôlant la présence du premier disque passant sur ladite table intermédiaire. De tels organes de contrôle sont bien connus, et permettent de délivrer un signal en l'absence du disque, par exemple par simple pénétration dans une fente prévue à cet effet. La partie mobile 8 peut également porter un galet d'axe radial au voisinage de l'organe scripteur, pour avoir un appui satisfaisant de ladite partie mobile sur le deuxième disque porte-diagramme passant sous ladite table intermédiaire (le galet 30 et son axe 31 sont représentés aux figures 2 et 3 seulement).

Il est intéressant de prévoir en outre une table d'appui supplémentaire 31, montée fixe contre la face intérieure de la porte, en regard de la partie mobile de la table intermédiaire ; le deuxième disque passe alors entre la table d'appui supplémentaire 31 et la partie mobile 8 de la table intermédiaire, laquelle présentera alors un profil effilé de façon que son plan d'appui pour le premier disque reste sensiblement perpendiculaire aux autres organes scripteurs 3. Ainsi que cela a été représenté sur la figure 3, la table d'appui supplémentaire 31 peut être munie d'une fente traversante 32 permettant le passage d'un autre organe scripteur pour la face opposée du deuxième disque porte-diagramme ou d'un organe contrôlant la présence dudit disque. Ceci permet en particulier une option intéressante, à savoir un enregistrement de comptetours en face arrière du deuxième disque au moyen d'un organe scripteur associé 33.

Les opérations de manipulation du dispositif inscripteur de l'invention ne poseront pour l'opérateur aucun problème particulier. Les figures 6a à 6e montrent schématiquement comment est réalisée l'insertion des deux disques porte-diagramme (l'extraction se faisant dans un ordre inverse):

- Figure 6a, la patte 26 est mise en position haute, et l'opérateur relève la partie mobile 8 de la table intermédiaire de façon à dégager l'espace délimité entre la face intérieure 7 de la porte et la partie fixe de ladite table intermédiare ; lors du relèvement de la partie mobile 8 contre l'action du ressort de torsion 14, l'organe scripteur 9 accompagne ladite partie mobile sous l'action du ressort de torsion 15, et reste protégé dans l'éventuel évidement 27 ménagé à cet effet dans ladite partie mobile.
- Figure 6b, l'opérateur insère le deuxième disque 34 (disque deuxième chauffeur) sous la partie fixe 6 de la table intermédiaire, tout en maintenant la partie mobile 8 relevée ; ledit deuxième disque peut alors être parfaitement centré sur la couronne support 4.
- Figure 6c, l'opérateur relâche la partie mobile 8 qui se rabat naturellement dans sa position de repos sous l'action du ressort de torsion 14, accompagnant dans son mouvement l'organe scripteur 9 qui reste toujours plaqué contre ladite partie mobile.
- Figure 6d, l'opérateur peut alors disposer le premier disque 35 (disque premier chauffeur), venant se superposer directement sur le deuxième disque 34 dans la zone centrale d'entraînement.
- Figure 6e, l'opérateur rabat la patte 26, et les deux disques 34, 35 sont alors parfaitement centrés et fixés, en position prête à l'enregistrement après fermeture du capot.

Le dispositif inscripteur de l'invention permet ainsi un mode d'enregistrement particulièrement précis au moyen d'un organe scripteur disposé entre deux disques porte-diagramme, lesquels sont parfaitement fixés et centrés sans risque d'un glissement relatif qui introduirait une erreur dans l'interprétation des enregistrements.

Bien que le dispositif inscripteur de l'invention soit plus particulièrement destiné à une utilisation avec deux disques porte-diagramme, il est à noter qu'un enregistrement avec un seul disque est également possible : il suffit alors de poser ce disque directement sur la table intermédiaire, comme s'il s'agissait du support naturel que représenterait la face intérieure de la porte articulée, sans qu'il soit nécessaire de démonter ladite table intermédiaire et l'éventuelle table d'appui supplémentaire.

**Revendications**

1. Dispositif inscripteur pour enregistreur à deux disques porte-diagramme, ledit enregistreur comprenant un boîtier (1), une porte (2) articulée sur ledit boîtier et un mécanisme d'entraînement (18) des disques porte-diagramme (35, 35), le dispositif inscripteur comportant des moyens de support et des organes scripteurs (3, 9) permettant une inscription simultanée des deux disques porte-diagramme, caractérisé par le fait qu'il comporte une table intermédiaire (5) passant entre les deux disques porte-diagramme (34, 35) sur un secteur angulaire de ceux-ci, ladite table étant formée d'une partie (6) montée fixe sur la porte (2) à distance de la face intérieure de celle-ci et d'une partie mobile (8) articulée sur ladite partie fixe, et au moins un organe scripteur (9) disposé entre ladite partie mobile et ladite face intérieure de la porte, ledit organe scripteur étant également articulé sur ladite partie fixe de la table intermédiaire.

2. Dispositif inscripteur selon la revendication 1, caractérisé par le fait que l'organe scripteur (9) disposé entre les disques porte-diagramme et la partie mobile de la table intermédiaire sont articulés sur un axe commun (13).

3. Dispositif inscripteur selon la revendication 2, caractérisé par le fait que l'axe commun (13) est sensiblement perpendiculaire à l'axe d'articulation de la porte.

4. Dispositif inscripteur selon l'une des revendications 1 à 3, caractérisé par le fait que des moyens élastiques (14) sont prévus pour rappeler constamment la partie mobile (8) de la table intermédiaire en direction de la face intérieure de la porte.

5. Dispositif inscripteur selon la revendication 4, caractérisé par le fait que d'autres moyens élastiques (15) plus faibles sont prévus pour rappeler constamment l'organe scripteur (9) disposé entre les disques porte-diagramme en direction de la partie mobile (8) de la table intermédiaire.

6. Dispositif inscripteur selon les revendications 4 et 5, caractérisé par le fait que les moyens élastiques (14, 15) sont des ressorts de torsion montés sur l'axe d'articulation commun (13).

7. Dispositif inscripteur selon la revendication 6, caractérisé par le fait que le ressort (15) servant au rappel angulaire de l'organe scripteur (9) sert également de rappel axial dudit organe scripteur vers une position de butée formant référence pour le diagramme d'enregistrement concerné.

8. Dispositif inscripteur selon l'une des revendications 1 à 7, caractérisé par le fait que la partie fixe (6) de la table intermédiaire supporte des organes (19, 20, 21, 17) transmettant le mouvement à l'organe scripteur (9) disposé entre les disques porte-diagramme, lesdits organes de transmission étant mobiles en translation parallèlement à l'axe d'articulation (13) dudit organe scripteur.

9. Dispositif inscripteur selon l'une des revendications 1 à 8, caractérisé par le fait que l'organe scripteur (9) est disposé entre les disques porte-diagramme de façon à permettre un enregistrement ayant la même référence angulaire que ceux obtenus par le ou les autres organes scripteurs (3) montés de façon connue en soi dans le boîtier (1) de l'enregistreur.

10. Dispositif inscripteur selon l'une des revendications 1 à 9, caractérisé par le fait que la table intermédiaire (5) a la forme générale d'un secteur angulaire, dont la largeur permet le contact naturel des deux disques porte-diagramme dans la zone centrale d'entraînement desdits disques porte-diagramme.

11. Dispositif inscripteur selon la revendication 10, caractérisé par le fait que le secteur angulaire correspond à un angle d'environ 120°.

12. Dispositif inscripteur selon l'une des revendications 1 à 11, caractérisé par le fait que la partie mobile (8) de la table intermédiaire présente, du côté de la face intérieure de la porte, un évidement (27) recevant l'organe scripteur (9) adjacent pour protéger ledit organe lors de l'insertion du disque porte-diagramme concerné.

13. Dispositif inscripteur selon la revendication 12, caractérisé par le fait que l'évidement (27) est bordé par un ergot de protection (28) au voisinage de l'extrémité libre de l'organe scripteur.

14. Dispositif inscripteur selon l'une des revendications 1 à 13, caractérisé par le fait que la partie mobile (8) de la table intermédiaire présente une fente traversante (29) permettant le passage d'un organe contrôlant la présence du disque porte-diagramme passant sur ladite table intermédiaire.

15. Dispositif inscripteur selon l'une des revendications 1 à 14, caractérisé par le fait que la partie mobile (8) de table intermédiaire porte un galet (30) au voisinage de l'organe scripteur disposé entre les disques porte-diagramme, pour un appui de la partie mobile sur le disque porte-diagramme passant sous ladite table intermédiaire.

16. Dispositif inscripteur selon l'une des revendications 1 à 15, caractérisé par le fait qu'une table d'appui supplémentaire (31) est monté fixe contre la face intérieure (7) de la porte, en regard de la partie mobile (8) de la table intermédiaire.

17. Dispositif inscripteur selon la revendication 16, caractérisé par le fait que la table d'appui supplémentaire (31) est munie d'une fente traversante (32) permettant le passage d'un autre organe scripteur pour la face opposée du disque porte-diagramme concerné ou d'un organe contrôlant la présence dudit disque porte-diagramme.

## Claims

1. Inscription device for recorder having two chart holder discs, the said recorder comprising a housing (1), a door (2) articulated with the said housing and a driving mechanism (18) for the chart holder discs (34, 35), the inscription device having support means and stylus elements (3, 9) allowing the two chart holder discs to be inscribed simultaneously, characterized in that it has an intermediate plate (5) passing between the two chart holder discs (34, 35) in an angular sector thereof, the said plate being formed from a part (6) mounted in fixed manner on the door (2) spaced from the inner face thereof and from a movable part (8) articulatd with the said fixed part, and at least one stylus element (9) arranged between the said mobile part and the said inner face of the door, the said stylus element also being articulated with the said fixed part of the intermediate plate.

2. Inscription device according to Claim 1, characterized in that the stylus element (9) arranged between the chart holder discs and the movable part of the intermediate plate are articulated on a common shaft (13).

3. Inscription device according to Claim 2, characterized in that the common shaft (13) is substantially perpendicular to the axis of articulation of the door.

4. Inscription device according to one of Claims 1 to 3, characterized in that resilient means (14) are provided to constantly return the movable part (8) of the intermediate plate in the direction of the inner face of the door.

5. Inscription device according to Claim 4, characterized in that other resilient means (15) of less strength are provided to constantly return the stylus element (9) arranged between the chart holer discs in the direction of the movable part (8) of the intermediate plate.

6. Inscription device according to Claims 4 and 5, characterized in that the resilient means (14, 15) are torsional springs mounted on the common articulation shaft (13).

7. Inscription device according to Claim 6, characterized in that the spring (15) serving for the angular return of the stylus element (9) also serves for the axial return of the said stylus element to a stop position constituting a reference point for the relevant record chart.

8. Inscription device according to one of Claims 1 to 7, characterized in that the fixed part (6) of the intermediate plate supports elements (19, 20, 21, 17) transmitting the movement to the stylus element (9) arranged between the chart holder discs, the said transmission elements being movable in translational movement parallel to the articulation shaft (13) of the said stylus element.

9. Inscription device according to one of Claims 1 to 8, characterized in that the stylus element (9) is arranged between the chart holder disc so as to permit a record having the same angular reference as those obtained by the or the other stylus element(s) (3) mounted in a manner known per se in the housing (1) of the recorder.

10. Inscription device according to one of Claims 1 to 9, characterized in that the intermediate plate (5) has the general shape of an angular sector whereof the width allows the natural contact of the two chart holder discs in the central driving region of the said chart holder discs.

11. Inscription device according to Claim 10, characterized in that the angular sector corresponds to the angle of approximately 120°.

12. Inscription device according to one of Claims 1 to 11, characterized in that the movable part (8) of the intermediate plate has, on the inner face side of the door, a hollow (27) receiving the adjacent stylus element (9) to protect the said element during insertion of the relevant chart holder disc.

13. Inscription device according to Claim 12, characterized in that the hollow (27) is edged by a protective lug (28) in the vicinity of the free end of the stylus element.

14. Inscription device according to one of Claims 1 to 13, characterized in that the movable part (8) of the intermediate plate has a cross-slot (29) allowing an element monitoring the presence of the chart holder disc passing over the said intermediate plate to pass through.

15. Inscription device according to one of Claims 1 to 14, characterized in that the movable part (8) of the intermediate plate carries a roller (30) in the vicinity of the stylus element arranged between the chart holder discs, for the movable part to bear on the chart holder disc passing below the said intermediate plate.

16. Inscription device according to one of Claims 1 to 15, characterized in that a supplementary bearing plate (31) is mounted in fixed manner against the inner face (7) of the door, opposite the movable part (8) of the intermediate plate.

17. Inscription device according to Claim 16, characterized in that the supplementary bearing plate (31) is provided with a cross-slot (32) allowing another stylus element for the opposite face of the relevant chart holder disc or an element monitoring the presence of the said chart holder disc to pass through.

**Patentansprüche**

1. Schreibwerk für eine Aufzeichnungsvorrichtung für zwei Diagrammscheiben, wobei die Aufzeichnungsvorrichtung ein Gehäuse (1), einen am Gehäuse angelenkten Deckel (2) und eine Antriebsvorrichtung (18) für die Diagrammscheiben (34, 35) aufweist, das Schreibwerk Träger und Schreiborgane (3, 9) zum gleichzeitigen Beschreiben der beiden Diagrammscheiben umfaßt, dadurch gekennzeichnet, daß es einen sich zwischen den beiden Diagrammscheiben (34, 35) über einen Winkelsektor derselben erstreckenden Zwischenteller (5) aufweist, der von einem am Deckel (2) im Abstand von dessen Innenfläche fest angeordneten Abschnitt (6) und einen am feststehenden Abschnitt angelenkten beweglichen Abschnitt (8) gebildet ist, und wenigstens ein Schreiborgan (9), das zwischen dem feststehenden Abschnitt und der Deckelinnenfläche angeordnet und ebenfalls am feststehenden Abschnitt des Zwischentellers angelenkt ist.

2. Schreibwerk nach Anspruch 1, dadurch gekennzeichnet, daß das zwischen den Diagrammscheiben angeordnete Schreiborgan (9) und der bewegliche Abschnitt des Zwischentellers an eine gemeinsame Achse (13) angelenkt sind.

3. Schreibwerk nach Anspruch 2, dadurch gekennzeichnet, daß die gemeinsame Achse (13) im wesentlichen rechtwinklig zur Gelenkachse des Deckels ist.

4. Schreibwerk nach einem der Ansprüche 1 bis 3, dadurch gekennzeichnet, daß elastische Mittel (14) vorgesehen sind, um den beweglichen Abschnitt (8) des Zwischentellers ständig in Richtung auf die Innenfläche des Deckels vorzuspannen.

5. Schreibwerk nach Anspruch 4, dadurch gekennzeichnet, daß weitere, schwächere elastische Mittel (15) vorgesehen sind, um das zwischen den Diagrammscheiben angeordnete Schreibwerk (9) ständig in Richtung auf den beweglichen Abschnitt (8) des Zwischentellers vorzuspannen.

6. Schreibwerk nach den Ansprüchen 4 und 5, dadurch gekennzeichnet, daß die elastischen Mittel (14, 15) auf der gemeinsamen Gelenkachse (13) angeordnete Drehfedern sind.

7. Schreibwerk nach Anspruch 6, dadurch gekennzeichnet, daß die zur Vorspannung des Schreiborgans (9) mit Winkelbewegung dienende Feder (15) auch zur axialen Vorspannung dieses Schreiborgans in eine Anschlagstellung dient, welche eine Bezugsstellung für das betreffende Aufzeichnungsdiagramm bildet.

8. Schreibwerk nach einem der Ansprüche 1 bis 7, dadurch gekennzeichnet, daß der feststehende Abschnitt (6) des Zwischentellers Bauteile (19, 20, 21, 17), trägt, welche die Bewegung auf das zwischen den Diagrammscheiben angeordnete Schreiborgan (9) übertragen und translatorisch parallel zur Gelenkachse (13) des Schreiborganes bewegbar sind.

9. Schreibwerk nach einem der Ansprüche 1 bis 8, dadurch gekennzeichnet, daß das Schreiborgan (9) zwischen den Diagrammscheiben so angeordnet ist, daß eine Aufzeichnung ermöglicht wird, welche die gleiche Ausgangswinkelstellung hat wie die Aufzeichnungen, die mit dem oder den anderen Schreiborgan(en) (3) erzielt werden, welche in an sich bekannter Weise im Deckel (1) der Aufzeichnungsvorrichtung angeordnet ist/sind.

10. Schreibwerk nach einem der Ansprüche 1 bis 9, dadurch gekennzeichnet, daß der Zwischenteller (5) die ungefähre Gestalt eines Winkelsektors hat, dessen Breite die natürliche Berührung der beiden Diagrammscheiben in ihrem zentralen Antriebsbereich ermöglicht.

11. Schreibwerk nach Anspruch 10, dadurch gekennzeichnet, daß der Winkelsektor einem Winkel von etwa 120° entspricht.

12. Schreibwerk nach einem der Ansprüche 1 bis 11, dadurch gekennzeichnet, daß der bewegliche Abschnitt (8) des Zwischentellers auf der der Deckelinnenfläche zugewandten Seite eine das benachbarte Schreiborgan (9) aufnehmende Ausnehmung (27) aufweist, um dieses Schreiborgan beim Laden der zugehörigen Diagrammscheibe zu schützen.

13. Schreibwerk nach Anspruch 12, dadurch gekennzeichnet, daß am Rand der Ausnehmung (27), in der Nähe des freien Endes vom Schreiborgan ein Schutzvorsprung (28) angeordnet ist.

14. Schreibwerk nach einem der Ansprüche 1 bis 13, dadurch gekennzeichnet, daß der bewegliche Abschnitt (8) des Zwischentellers einen durchgehenden Schlitz (29) aufweist, der den Durchgang eines Bauteils ermöglicht, das das Vorhandensein der auf den Zwischenteller geladenen Diagrammscheibe prüft.

15. Schreibwerk nach einem der Ansprüche 1 bis 14, dadurch gekennzeichnet, daß der bewegliche Abschnitt (8) des Zwischentellers in der Nähe des zwischen den Diagrammscheiben angeordneten Schreiborgans eine Rolle (30) zum Abstützen des beweglichen Abschnitts auf der unter den Zwischenteller geladenen Diagrammscheibe aufweist.

16. Schreibwerk nach einem der Ansprüche 1 bis 15, dadurch gekennzeichnet, daß an der Innenfläche (7) des Deckels dem beweglichen Abschnitt (8) des Zwischentellers gegenüber ein zusätzlicher Auflageteller (31) fest angeordnet ist.

17. Schreibwerk nach Anspruch 16, dadurch gekennzeichnet, daß der zusätzliche Auflageteller (31) mit einem durchgehenden Schlitz (32) versehen ist, der den Durchgang eines anderen Schreiborgans für die gegenüberliegende Seite der betreffenden Diagrammscheibe oder eines das Vorhandensein dieser Diagrammscheibe prüfenden Bauteils ermöglicht.

# FIG.1

# FIG. 2

FIG_3

FIG_4

FIG_5

FIG.6a

26

22

8

4

31

6

2

FIG.6b

34

26

22

8

4

31

6

2

FIG.6c

34

26

8

6

4

31

2

FIG.6d

35

6

34

31

8

2

26

FIG.6e

35

8

6

34

31

2